# EUROPEAN PATENT APPLICATION

(11) **EP 0 930 020 A1**
(43) Date of publication of application: **21.07.1999**
(21) Application number: 99200149.5
(22) Date of filing: 18.01.1999
(51) Int. Cl.: A23L 1/325, A23L 1/314, A23L 1/315, A23L 1/317

(54) **Meat composition**

(30) Priority: 16.01.1998 NL 1008052
(71) Applicant: CAMPINA MELKUNIE B.V., NL-5301 LB Zaltbommel (NL)
(72) Inventor: Hendrickx, Antonius Cornelius Maria, 5464 PA Veghel (NL); Westerbeek, Johannes Martinus Maria, 5346 WR Oss (NL); Hendrikx, Johannes Lambertus Sebastiaan Martinus, 5467 LB Veghel (NL)
(74) Representative: Ottevangers, Sietse Ulbe

(57) **Abstract**

The invention relates to a meat composition comprising meat and a fat powder based on fat, carbohydrates and protein.

## Description

This invention relates to a meat composition, more particularly a meat composition containing deboned meat, having improved applicability in respect of its appearance, in particular its color.

The consumption of so-called white meat from poultry (such as chicken and turkey), fish or calf is rapidly increasing. This is true not only for in high-grade applications, such as in chicken fillets and rolled meats, but also in finely comminuted "meat" products, as in fish sausages, fish sticks or chicken sausage. For the latter applications, it would be desirable, for economic reasons, to use white meat of a less high grade, such as bone meat, so-called mechanically deboned meat. Such meat, however, contains a relatively large amount of undesired pigments (hemoglobins) originating from blood veins present in the transition area between bone and meat. The functionality of this meat is normally not much less than that of other white meat. Therefore, products which, upon optional heating, are supposed to be white in color, and to which mechanically deboned meat has been added, will, in the absence of additional measures, obtain a slightly red color, which signifies an undesired adverse effect.

Different methods have been proposed to eliminate these negative aspects. In Meat Processing (August 1985, p. 85) it is indicated that Calcium caseinate in chicken nuggets, when using MDP (mechanically deboned poultry), provides for sufficient whiteness. It is indicated that it can replace titanium dioxide. The effect of Calcium caseinate is limited, certainly when viewed over time. In the end product, Calcium caseinate will dissolve and be converted to the non-effective Sodium caseinate. In Poultry Science 71 (1992) 1221, a method is described in which mechanically deboned chicken meat is washed with a 0.5% solution of sodium bicarbonate and water, followed by sieving of any residual bone and vein material.

Yung and Froning (Journal of Muscle Foods 5 (1994) 221) wash with a 0.5 wt.% sodium bicarbonate solution or with 0.1 m NaCl solution. In Poultry Science 69 (1990) p. 307, mechanically deboned chicken meat washed with bicarbonate is additionally treated with spray-dried egg protein. James and McCrudden propose bleaching mechanically deboned meat with 0.85% hydrogen peroxide solution (FSTA 1997 9 8R 410).

Most of these methods have as a disadvantage that the meat is diluted and that meat constituents are lost.

It is an object of the invention to provide a meat composition, more particularly a meat composition containing mechanically deboned meat, having an improved appearance. It is another object of the invention to provide a meat composition of improved color and/or applicability, while no or only little modification of the original meat components has taken place. It is a further object of the invention to provide a meat composition of improved appearance and/or applicability, which has not been obtained by a washing or bleaching treatment of the meat.

The invention is based on the surprising insight that these and other objectives can be achieved by adding a fat powder based on fat, carbohydrates and protein. The invention accordingly relates, in a first embodiment, to a meat composition comprising meat and a fat powder based on fat, carbohydrates and protein.

Surprisingly, it has been found that such a meat composition, especially if based on mechanically deboned meat on the basis of fish, veal or poultry, is considerably less red in color, which increases consumer acceptance considerably, without the functionality and quality of the meat being adversely affected.

The composition according to the invention in its simplest form consists of meat and the fat powder. This meat can consist wholly or partly of mechanically deboned meat. When using mechanically deboned meat, the advantages of the invention are clearest. In addition to these components, the composition can further contain other constituents conventionally used in the above-mentioned kinds of compositions, such as herbs, meal, food additives and the like.

Fat powders are widely used in the world of food, such as, for instance, in ice-cream powders, dry soups and sauces, mousse powders and coffee creamers. Such fat powders are mostly dried oil-in-water emulsions, at least consisting of fat, carrier and a stabilizer/emulsifier, as well as a protein. In fat powders used according to the present invention, fat is preferably the dominant factor. The content can vary between 10 and 80%. Below 10% the functionality will rapidly decrease; a fat content in excess of 80% is difficult to realize. Preferably, the fat content will vary between 35 and 80%, with the emphasis on the higher contents between 50% and 80%. In view of the intended use (foodstuffs), the fat must be food-grade. Preferred are fats which have been hardened to a high degree, because they are less sensitive to fat oxidation. In some cases, the oxidation stability can be increased by addition of antioxidants. In addition to the known chemical antioxidants, such as BHA and BHT (butyl hydroxyanisole and butyl hydroxytoluene, respectively), also natural antioxidants such as, e.g., tocopherols, lactoferrin or a rosemary extract can be used. An additional advantage is that the fat naturally present in the meat is also protected against oxidation.

It is preferred to start from so-called non-lauric fats, i.e., fats that do not contain C-12 fatty acids. Especially eligible here is palm oil or soybean oil, preferably hardened. In the applications mentioned, lauric fats can lead to undesired deviations in taste.

As carrier material, preferably carbohydrates are used. Well known and widely used carbohydrates are (pregelatinized) starch, maltodextrin, glucose syrup and milk sugar. Preferably, a carbohydrate with few reducing sugars is used.

It has been found that the use of such sugars, such as maltodextrin, is advantageous with regard to color preservation upon further processing of the meat composition according to the invention.

Eligible as emulsifier/stabilizer is, in the first place, protein. Eligible are food proteins such as milk protein (caseinate), whey protein, soluble wheat protein, soybean protein. Other than through these basic ingredients, the functionality of the powder can be increased by addition of additional emulsifiers, stabilizers and wetting agents. If the ratio of fat to protein is high, additional dosage of an emulsifier is desirable. Eligible emulsifiers are, in principle, all emulsifiers suitable for human food. An additional wetting agent can be added, so that the solubility, and especially the rate of dissolving at the low temperatures used in the application is sufficient. For this purpose, short-chain fats (so-called MCT oil medium chain triglycerides with C4-C10 fatty acids) can be used. An additional advantage is that these fatty acids are saturated and do not exhibit oxidation phenomena.

In the preparation of these fat powders, the starting material in most cases will be an aqueous suspension or solution of the carrier material with protein, which is heated to a temperature above the melting point of fat; temperatures between 65 and 80°C are preferred because then pasteurization occurs at the same time. Added to this, with stirring, are the fat and other ingredients. The whole is homogenized at 70°C to a desired degree of homogenization and fat globule size distribution. The solids content of this suspension will preferably be between 40 and 70%.

Thereupon spray-drying is carried out. Eligible are conventional driers that work according to the principle of wheel atomization or nozzle atomization. After drying, the warm powder is cooled off in a fluid bed, preferably through forced cooling, in order to rapidly obtain a good crystallization of the fat. The fat powder thereby obtained can be mixed directly with mechanically deboned bone meat of poultry, fish or veal, which yields a product clearly less red in color. This product can be stored in a conventional manner in a deepfreezer or refrigerator until the moment of use. The fat powder can also be applied concurrently with the processing of the mechanically deboned bone meat in applications such as sausage.

The effectiveness of the fat powder of the invention can be measured by color comparisons, i.e., a visual qualitative comparison as well as a quantitative instrumental comparison using, for instance, a Hunterlab colorimeter.

The invention is presently elucidated in and by the following non-limiting examples.

### Example 1

To mechanically deboned chicken meat, 5, 10 and 20%, respectively, of a fat powder, containing 75% fat, 15% milk sugar and 10% milk protein, were added and carefully mixed.

The color of these mixtures was judged visually; it was clear that addition of the fat powder resulted in a whiter color. This was confirmed by measurement with a Hunterlab colorimeter:

| | No fat powder | 5% | 10% | 20% |
|---|---|---|---|---|
| L-value | 46.4 | 52.0 | 53.7 | 57.4 |
| a-value | 21.9 | 19.1 | 18.1 | 16.9 |
| b-value | 13.7 | 14.2 | 14.1 | 14.5 |
| visual | red | red/pink | pink/red | pink |

### Example 2

In a cutter (Laska, type KT-45) 9.18 kg of chicken fillet was comminuted, whereafter 45 g of sodium phosphate, 270 g of sodium chloride and 1.6 g of sodium nitrite were added.

To this mix, 2.4 kg of ice was added, followed by further cutter treatment until a homogeneous mass was obtained. Then 3 kg of chicken skins was added, followed by renewed cutter treatment until homogeneity was achieved. During these last phases, flavoring agents, antioxidants and/or preserving agents can be added, as desired. They were not added in these examples, in order to demonstrate optimally the effect of the fat powder. The mix obtained was deaerated and filled in (artificial) sausage casings. Optionally, the mix can also be filled in cans.

The sausage thus obtained is sealed and heated in a water bath at 80°C to a core temperature of 70°C. Cans are heated at 110°C for 45 minutes.

After cooling in cold water, the sausages thus obtained can be judged, preferably after a storage time of one day.

Using a sharp knife, the sausage was cut and the surface was judged as to color, both visually and with the Hunterlab colorimeter, and as to consistency. In Table 1 the measuring data are shown.

### Example 3

Analogously to Example 2, chicken sausage was prepared, but a part of the chicken fillet was replaced with mechanically deboned chicken meat.

Respectively 20% and 40% of chicken fillet were replaced. The chicken sausages obtained were clearly less white and redder in color than the chicken sausage from Example 2. The quantitative Hunterlab measuring data are included in Table 1.

### Example 4

This example describes the preparation of chicken sausage, in which a part of the chicken fillet was replaced with mechanically deboned chicken meat and a fat powder, containing 75% fat, 15% milk sugar and 10% milk protein. In the case where 20% chicken fillet was replaced, 5% fat powder was added; in the case where 40% was replaced, 10% was added.

Analogously to Example 2, chicken sausages were prepared according to this recipe. The measuring data of these sausages are also listed in Table 1.

### Example 5

In a cutter (type KT-45, make Laska) 6000 g of cod was comminuted and thereupon 210 g of salt and 6000 g of milk were admixed. To this mix, 1410 g of ice was added, followed by further cutter treatment to form a homogeneous mass. Then 450 g of soybean oil, herbs and 900 g of starch were added and again cutter-treated to form a homogeneous mass. The mix obtained was deaerated and filled in (artificial) sausage casings. The sausage thus obtained was sealed and heated with steam at 80°C for 1 hour.

After cooling off in cold water and a storage time of at least one day, the sausages were judged as to color, both visually and with the Hunterlab colorimeter, and as to consistency. The measuring data are summarized in Table 2.

### Example 6

Analogously to Example 5, fish sausage was prepared with a fat powder from Example 4, instead of soybean oil. The quantitative data are included in Table 2.

### Example 7

Analogously to Example 5, instead of cod, pollack, a darker kind of fish, was used. The measuring data are again included in Table 2.

### Example 8

Analogously to Example 6, instead of cod, pollack was used again. The measuring data are included in Table 2.

**Table 1**

| **Measuring data chicken sausage** | | | | | |
|---|---|---|---|---|---|
| | 100 chicken fillet | 80 chicken fillet 20 MDM | 80 chicken fillet 20 MDM 5 fat powder | 60 chicken fillet 40 MDM | 60 chicken fillet 40 MDM 10 fat powder |
| L-value | 73.2 | 68.0 | 72.3 | 65.0 | 71.1 |
| a-value | 6.9 | 9.6 | 7.9 | 11.2 | 8.9 |
| b-value | 10.3 | 9.7 | 9.2 | 9.4 | 9.0 |
| Consistency | good | softer | good | soft | good |
| Color visual | good | pinkish | good | pinkish | good |

**Table 2**

| | Cod soybean oil | Cod fat powder | Pollack soybean oil | Pollack fat powder |
|---|---|---|---|---|
| L-value | 77.1 | 81.0 | 72.6 | 75.1 |
| a-value | -2.4 | -2.4 | -2.6 | -2.0 |
| b-value | 5.7 | 6.3 | 8.0 | 8.1 |
| Consistency | good | good | soft | good |
| color visual | white | whiter | dull white | white |

## Claims

1. A meat composition, comprising meat and a fat powder based on fat, carbohydrates and protein.

2. A composition according to claim 1, wherein the fat powder contains 10 to 80% by weight of fat.

3. A composition according to claim 1 or 2, wherein the fat is selected from wholly and partly hardened fats and oils.

4. A composition according to claim 3, wherein the fat is selected from hardened palm oil, soybean oil and hardened animal fat.

5. A composition according to claims 1-4, wherein the meat is, optionally mechanically, deboned meat.

6. A composition according to claims 1-5, wherein white meat, preferably derived from fish, poultry or calf, is used.

7. A composition according to claims 1-6, wherein the amount of fat powder is between 1 and 30% by weight, based on the weight of the meat.

8. A method for improving the color of meat, more particularly mechanically deboned white meat, comprising mixing the meat with a fat powder based on fat, carbohydrates and protein.

9. A method according to claim 8, wherein the fat powder contains 10 to 80% by weight of fat.

10. A method according to claim 8 or 9, wherein the fat is selected from wholly and partly hardened fats and oils.

11. A method according to claim 10, wherein the fat is selected from hardened palm oil, soybean oil and hardened animal fat.

12. A method according to claims 8-11, wherein the meat is, optionally mechanically, deboned meat.

13. A method according to claims 8-12, wherein white meat, preferably derived from fish, poultry or calf, is used.

14. A method according to claims 8-13, wherein the amount of fat powder is between 1 and 30% by weight, based on the weight of the meat.

15. Use of a fat powder based on fat, carbohydrates and protein, for improving the color of white meat.
